(19) Europäisches Patentamt
European Patent Office
Office européen des brevets

(11) **EP 1 022 056 A1**

(12) **DEMANDE DE BREVET EUROPEEN**

(43) Date de publication:
**26.07.2000  Bulletin 2000/30**

(21) Numéro de dépôt: **00400003.0**

(22) Date de dépôt: **03.01.2000**

(51) Int. Cl.[7]: **B01J 8/04**, F25J 3/00,
F25J 3/08,  C10K 1/20,
C10K 1/24,  C10K 3/04,
B01D 53/04,  B01D 53/88,
B01D 53/86,  B01J 8/00

(84) Etats contractants désignés:
AT BE CH CY DE DK ES FI FR GB GR IE IT LI LU
MC NL PT SE
Etats d'extension désignés:
AL LT LV MK RO SI

(30) Priorité:  **20.01.1999 FR 9900576**

(71) Demandeur:
**L'AIR LIQUIDE, SOCIETE ANONYME POUR
L'ETUDE ET L'EXPLOITATION DES PROCEDES
GEORGES CLAUDE
75007 Paris (FR)**

(72) Inventeurs:
• **Monereau, Christian
  75011 Paris (FR)**
• **Belot, Jean-Marc
  94210 La Varenne Saint Hilaire (FR)**
• **Labasque, Jacques
  78000 Versailles (FR)**

(74) Mandataire:
**Le Moenner, Gabriel et al
Societé l'Air Liquide
Service Brevets et Marques
75, Quai d'Orsay
75321 Paris Cédex 07 (FR)**

(54) **Installation de traitement de fluide comportant plusieurs lits de particules maintenus par une grille de séparation**

(57)  L'invention concerne une installation de traitement de fluide, notamment de gaz, comprenant au moins un récipient (R) de traitement, par exemple un ou plusieurs adsorbeurs ou réacteurs catalytiques, contenant un premier lit (L1) de particules (P1) ayant une première granulométrie (g1), et un deuxième lit (L2) de particules (P2) ayant une deuxième granulométrie (g2). Les premier et deuxième lits (L1, L2) de particules (P1, P2) sont adjacents et séparés par une structure de séparation (G), telle une grille ou une tôle ajourée, comportant des orifices de passage (OG) de fluide ayant une dimension (d), avec : g1 > d > g2. Les premier et deuxième lit de particules peuvent constitués de particules adsorbantes et/ou catalytiques, notamment de type zéolite, alumine, hopcalite ou analogues. Utilisation d'une installation selon l'invention pour séparer, purifier ou convertir un ou des constituants d'un flux gazeux, tels l'air, les gaz de synthèse ou les hydrocarbures, notamment les oléfines.

FIG.1

EP 1 022 056 A1

**Description**

L'invention concerne une installation et un procédé de traitement de fluides, en particulier une installation et un procédé de séparation, de purification, de filtration ou de conversion catalytique d'un flux gazeux, notamment d'un flux gazeux contenant essentiellement de l'oxygène et de l'azote, tel l'air, d'un flux gazeux contenant essentiellement de l'hydrogène et/ou du monoxyde de carbone ou d'un flux gazeux contenant essentiellement un ou plusieurs hydrocarbures.

Actuellement, les gaz et les mélanges gazeux sont de plus en plus utilisés au plan industriel.

Ainsi, les gaz de l'air, tels notamment l'oxygène et l'azote, sont couramment utilisés dans de nombreux domaines, tel notamment le domaine de l'électronique, le domaine de la combustion, le domaine médical, le domaine alimentaire, le domaine du soudage.....

En outre, il en va de même d'autres gaz et mélanges gazeux, tel les gaz de synthèse, encore appelés 'syngaz', ou les hydrocarbures, telles notamment les oléfines.

Actuellement, l'une des techniques utilisées pour produire ou purifier les gaz, en particulier les gaz de l'air, est la technique dite "PSA" (pour Pressure Swing Adsorption), laquelle recouvre non seulement les procédés PSA proprement dits, mais aussi les procédés analogues, tels les procédés VPSA ou VSA (Vacuum "Pressure" Swing Adsorption), TSA (Temperature Swing Adsorption) ou MPSA (Mixed Pressure Swing Adsorption).

Selon cette technique PSA, lorsque le mélange gazeux à séparer est l'air et que le composant à récupérer est l'oxygène, l'oxygène est séparé dudit mélange gazeux grâce à une adsorption préférentielle d'au moins l'azote sur un ou plusieurs matériaux adsorbant préférentiellement au moins l'azote et soumis à des cycles de pression donnée dans la zone de séparation.

L'oxygène qui ne s'adsorbe pas ou peu est récupéré en sortie de ladite zone de séparation à une pureté, en général, supérieure à 90 %, voire à 93%.

Plus généralement, un procédé PSA de séparation d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique:

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant l'adsorbant, par passage de ladite pression basse à ladite pression haute.

De manière similaire, pour pouvoir être utilisés au plan industriel, certains gaz nécessitent d'être purifiés au préalable, notamment par adsorption et/ou par catalyse, pour convertir, transformer ou éliminer certains des composés ou des impuretés qu'ils contiennent.

Ainsi, l'air atmosphérique est habituellement débarrassé de tout ou partie des impuretés qu'il contient notamment vapeur d'eau, dioxyde de carbone, monoxyde de carbone, hydrocarbures, oxydes d'azote et hydrogène, avant d'être soumis à des étapes subséquentes de fractionnement par distillation cryogénique et ce, afin d'éviter que ces impuretés ne viennent détériorer les performances des unités de séparation d'air, notamment les colonnes de distillation cryogéniques. L'élimination de ces impuretés est réalisée par exemple au moyen d'un adsorbant de type alumine ou zéolite et/ou au moyen d'un catalyseur, tels les oxydes métalliques.

De façon similaire, il est aussi connu d'éliminer les impuretés, notamment les résidus métalliques, susceptibles d'être présentes dans les oléfines pour éviter leur dégradation ou leur coloration, l'élimination de ces impuretés pouvant être réalisée par exemple au moyen d'un adsorbant de type alumine calcinée.

Cependant, dans tous les cas, il est connu que l'efficacité de séparation ou de purification du fluide, notamment d'un mélange gazeux comme l'air, dépend de nombreux paramètres, notamment de la composition du fluide à traiter, du type de matériau adsorbant ou catalytique utilisé et l'affinité de celui-ci pour les composés à adsorber ou à convertir, la taille des particules d'adsorbant ou de catalyseur, la composition de ces particules et leur agencement dans la ou les zones d'adsorption ou de catalyse.

En général, la taille de ces particules d'adsorbant ou de catalyseur est très variable, étant donné que l'adsorbant peut avoir une taille de quelques $\mu m$ (poudre) à quelques mm, notamment des billes d'adsorbant ayant une taille allant jusqu'à environ 50 mm.

Actuellement, les matériaux zéolitiques sont les adsorbants les plus utilisés dans les installations de séparation ou de purification de gaz mettant en oeuvre un procédé de type PSA.

Les particules zéolitiques contiennent habituellement des cations métalliques mono, di et/ou trivalents, par exemples des cations de métaux alcalins, alcalino-terreux, de métaux de transition et/ou lanthanides, incorporés lors de la synthèse des particules de zéolite et/ou insérés subséquemment par une technique d'échange d'ions, c'est-à-dire, en général, par mise en contact des particules de zéolite non-échangées ou zéolite brute avec une solution d'un ou plusieurs sels métalliques comprenant le ou les cations à incorporer dans la structure zéolitique et récupération subséquente des particules de zéolite échangée, c'est-à-dire de zéolite contenant une quantité donnée de cations métalliques. La proportion (en %) de cations métalliques introduits dans la structure zéolitique par rapport à la capacité totale d'échange est appelée le taux d'échange.

De telles zéolites sont notamment décrites dans les documents EP-A-486384, EP-A-606848, EP-A-589391, EP-A-589406, EP-A-548755, US-A-268023, EP-A-109063 et EP-A-760248.

En outre, il est également connu qu'une amélioration des performances du procédé de séparation ou de traitement du mélange gazeux peut être obtenue lorsqu'on utilise soit plusieurs adsorbants différents au sein du même récipient de traitement ou adsorbeur, c'est-à-dire de la même zone de séparation, comme notamment décrit dans le document EP-A-827771 ; soit un même adsorbant mais à des granulométries différentes au sein du même adsorbeur

Lorsque plusieurs lits de particules, par exemple deux lits, sont placés de manière adjacente au sein d'un même récipient de traitement, tel un adsorbeur ou un réacteur catalytique, ceux-ci peuvent être soit superposés, c'est-à-dire placés l'un sur l'autre, soit juxtaposés, c'est-à-dire placés l'un à côté de l'autre.

Cependant, qu'ils soient superposés ou juxtaposés, pour éviter des problèmes d'attrition, de mouvement et/ou de mélange des lits et garantir un maintien des lits au sein du récipient de traitement malgré les effets dus à pression et au débit du fluide les traversant, il est d'usage de séparer les lits à l'aide d'interfaces de séparation permettant non seulement de maintenir les lits mais aussi d'autoriser le passage du fluide à traiter, par exemple des grilles de séparation perforées.

Habituellement, les perforations, espacements, orifices de passage ou mailles de ces interfaces de séparation sont choisis de façon que leurs dimensions évitent le passage des particules proprement dites tout en autorisant le passage du fluide et éventuellement celui des poussières.

De là, la dimension (d) des orifices de passage de ces interfaces est classiquement inférieure à la granulométrie (g1) du lit de particules.

Par exemple, s'il s'agit d'orifices circulaires de diamètre (d0) et de billes sphériques de diamètre (d1), on a alors: $d = d0$  et $g1 = d1$  avec $d < g1$.

De manière analogue, s'il s'agit de fentes allongées de largeur (l) et de billes sphériques de diamètre compris entre d1 et d2 (d1 < d2), on a alors : $d = l$  et $g1 = d1$  avec $d < g1$.

Inversement, si les orifices de passage de l'interface de séparation sont telles qu'elles ne puissent retenir la majorité des particules, préférentiellement plus de 95% desdites particules, alors la dimension (d) des orifices de passage est supérieure à la granulométrie g2 du lit de particules.

De là, les perforations, les mailles ou espacements sont habituellement choisis de telle manière que leurs dimensions soient inférieures à celles, notamment le diamètre, des plus petites particules constituant les lits de traitement.

En d'autres termes, en considérant l'art antérieur:

- soit on n'utilise aucune interface de séparation ; ce qui n'est pas toujours possible ou souhaitable,
- soit on utilise une interface de séparation mais alors, dans ce cas, on choisit classiquement une interface dont les orifices de passage ont une dimension supérieure à celle des particules les plus petites devant être retenues.

Par ailleurs, les interfaces ou grilles de séparation peuvent être de type simple ou de type composite, selon les caractéristiques des matériaux et leurs conditions de fonctionnement.

Les interfaces de séparation de type simple permettent à la fois d'assurer la tenue mécanique et la rétention des particules constituant les lits de traitement. Elles sont généralement réalisées en une structure d'épaisseur suffisante, ajourée pour permettre la circulation du fluide à traiter à travers elle, par exemples une tôle, pontée ou non, avec des perforations de formes variées, notamment circulaires, oblongues, carrées ou fentes... ; une grille classique, ou une crépine, c'est-à-dire une structure obtenue par enroulage d'un fil autour d'un support, telle la crépine dite "Johnson".

Par ailleurs, les interfaces de séparation de type composite séparent les deux fonctions précitées. En effet, celles-ci se composent le plus souvent, d'une part, d'une structure métallique ajourée dont la fonction est d'assurer la résistance et le maintien mécanique et, d'autre part, d'un revêtement de tissu, de métal déployé ou analogue habillant ladite structure métallique ajourée de manière à assurer la fonction de rétention des particules constituant les lits de traitement et à autoriser le passage du fluide à traiter. Dans ce cas, le revêtement peut être fixé sur la structure métallique ajourée par des moyens de fixation variés, tel un collage, un vissage, un rivetage ou analogue, ou à l'aide de ceintures, de systèmes à goujons et rondelles, ou similaire. De plus, le revêtement peut être fixé directement sur ou contre la structure métallique ajourée ou, au contraire, en être espacé et maintenu à une certaine distance de cette structure pour modifier, si besoin est, l'écoulement du fluide à traiter. Plus précisément, l'espacement est obtenu par la géométrie non plane de la structure métallique ou du revêtement ou par le biais d'un système espaceur, tel un fil métallique.

Habituellement, le taux de perforation ou de maillage de ces structures composites est très variable et peut aller de 1% à plus de 50%. Généralement, le taux de perforation est choisi en fonction des contraintes du procédé de traitement, notamment des pertes de charges, de la distribution...., et du coût de fabrication.

Or, en pratique, il a été observé que ces structures simples ou composites présentent plusieurs inconvénients rendant leur mise en oeuvre d'autant plus difficile que la taille des particules constituant les lits de traitement diminue.

Ainsi, on a pu observer des bouchages ou des colmatages des perforations ou passages de fluides des structures de séparation ajourées par des débris de particules, notamment celles générées lors du remplissage ou dues aux contraintes résultant des variations de pression et/ou de température, ou encore celles présentes dans le matériau adsorbant dès l'origine.

En outre, la fabrication de certains types de structures est relativement difficile et ce, d'autant plus que les dimensions des perforations à réaliser est proche ou supérieure à l'épaisseur du matériau au travers duquel doivent être réalisés ces perforations, par exemple de l'épaisseur d'une tôle à perforer.

Si certaines structures permettent de pallier certains de ces inconvénients, telles les structures dites "Johnson" par exemple, celles-ci sont souvent beaucoup plus onéreuses que de simples tôles perforées.

De plus celles-ci ne permettent pas de résoudre tous les problèmes, étant donné qu'avec ce type de structure, on constate que le taux de vide décroît lorsque la taille des fentes diminue. Ainsi, pour un même type de crépine, lorsque la fente passe de 0.75 mm à 0.25 mm, le taux de vide est divisé par environ un facteur deux, ce qui peut conduire à des pertes de charges néfastes et incompatibles avec l'utilisation souhaitée.

Un but de la présente invention est donc d'améliorer les installations et les procédés de traitement de fluides, en particulier de purification ou séparation de gaz, mettant en oeuvre au moins deux lits de particules ayant des dimensions différentes, lesquels sont séparés par au moins une d'interface de séparation constituée d'une structure de séparation perforée, c'est-à-dire munie d'orifices de passage de fluide, telle une grille, une tôle perforée ou analogue.

Un autre but de la présente invention est d'améliorer les installations et les procédés de traitement de fluides en réduisant les pertes de charges se produisant dans au moins un adsorbeur ou d'un réacteur au sein duquel sont agencés au moins deux lits de particules ayant des dimensions différentes et séparés par au moins une d'interface de séparation constituée d'une structure de séparation munie d'orifices de passage de fluide.

Encore un autre but de la présente invention est donc d'améliorer les installations et les procédés de traitement de fluides en augmentant l'efficacité du traitement, notamment de la séparation par adsorption, d'un fluide réalisé dans au moins un adsorbeur ou dans au moins un réacteur au sein duquel sont agencés au moins deux lits de particules ayant des dimensions différentes et séparés par au moins une d'interface de séparation constituée d'une structure de séparation munie d'orifices de passage de fluide.

En outre, la présente invention entend aussi proposer un procédé et une installation de traitement de fluide, en particulier un procédé PSA de séparation ou de purification des gaz de l'air, susceptible de conduire à des performances meilleures que les procédés et installations connus.

La présente invention concerne alors une installation de traitement de fluide comprenant au moins un récipient de traitement contenant au moins un premier lit de particules ayant au moins une première granulométrie (g1) et au moins un deuxième lit de particules ayant au moins une deuxième granulométrie (g2), lesdits premier et deuxième lits de particules étant adjacents et séparés par au moins une structure de séparation comportant des orifices de passage de fluide ayant au moins une dimension (d), avec: g1 > d > g2.

Selon le cas, l'installation de l'invention peut inclure l'une ou plusieurs des caractéristiques suivantes:

- lesdits premier lit de particules et deuxième lit de particules sont superposés l'un à l'autre et en ce que la structure de séparation est en position sensiblement horizontale au sein dudit récipient de traitement.
- lesdits premier lit de particules et deuxième lit de particules sont juxtaposés et en ce que la structure de séparation est en position sensiblement verticale au sein dudit récipient de traitement.
- au moins un récipient de traitement est un adsorbeur ou un réacteur catalytique, de préférence un adsorbeur de forme essentiellement cylindrique ou conique.
- la structure de séparation est choisie parmi les plaques perforées ou les grilles, les crépines, les tissus métalliques et les caillebotis.
- la première granulométrie (g1) et la deuxième granulométrie (g2) sont telles que: g1 ≥ 2 . g2, g1 < 6. g2, de préférence g1 ≤ 5 . g2, préférentiellement g1≤ 3. g2
- la première granulométrie (g1) est comprise entre 3.5 mm et entre 1.5 mm, et/ou la deuxième granulométrie (g2) est comprise entre 1.7 mm et entre 0.3 mm, et/ou la dimension (d) des passages de fluide est comprise entre 1.5 mm et entre 0.5 mm.
- elle est choisie parmi les installations de type PSA comportant de 1 à 3 adsorbeurs, de préférence des adsorbeurs à géométrie radiale, c'est-à-dire à circulation de fluide radiale centrifuge ou centripète.
- la structure de séparation est en métal ou en alliage métallique.

L'invention concerne aussi un procédé de traitement de fluide, dans lequel on introduit le fluide à traiter dans au moins un récipient de traitement contenant au moins un premier lit de particules ayant au moins une première granulométrie et un deuxième lit de particules ayant au moins une deuxième granulométrie, lesdits premier et deuxième lits de particules étant adjacents et séparés par au moins une structure de séparation comportant des orifices de passage de fluide ayant au moins une dimension (d), avec: $g1 > d > g2$.

Selon le cas, le procédé de l'invention peut inclure l'une ou plusieurs des caractéristiques suivantes :

- le fluide à traiter est un gaz ou un mélange gazeux, de préférence un mélange gazeux contenant essentiellement de l'azote et de l'oxygène, notamment l'air ; un mélange gazeux contenant essentiellement de l'hydrogène et/ou du monoxyde de carbone ; un mélange gazeux contenant essentiellement un ou plusieurs hydrocarbures ; ou un mélange gazeux contenant du dioxyde de carbone.
- le fluide à traiter est un liquide cryogénique ou un gaz liquéfié, de préférence un mélange à l'état liquide contenant essentiellement de l'azote et de l'oxygène, notamment de l'oxygène liquide ou un liquide cryogénique riche en oxygène.
- au moins l'un desdits premier et deuxième lits de particules comporte des particules choisies parmi les zéolites, l'alumine, le gel de silice, le charbon actif et les céramiques.
- le traitement comporte au moins une étape d'adsorption ou une étape de catalyse d'au moins un composé contenu dans le fluide à traiter
- il est choisi parmi les procédés PSA, notamment VPSA, de séparation d'un flux gazeux, c'est-à-dire un gaz ou un mélange gazeux,
- il est choisi parmi les procédés de catalyse,
- il est choisi parmi les procédés d'adsorption,
- il est choisi parmi les procédés de filtration,
- le fluide à traiter est un mélange gazeux contenant essentiellement de l'azote et de l'oxygène,
- le fluide à traiter est un mélange gazeux contenant essentiellement de l'hydrogène et/ou du monoxyde de carbone,
- le fluide à traiter est un mélange gazeux contenant essentiellement un ou plusieurs hydrocarbures, notamment des oléfines,
- au moins l'un desdits premier lit et deuxième lit de particules comporte des particules catalytiques et en ce que le traitement du fluide comporte au moins une étape de catalyse d'au moins un composé gazeux au moyen desdites particules catalytiques.
- au moins l'un desdits premier lit et deuxième lit de particules comporte des particules catalytiques et en ce que le traitement du fluide comporte au moins une étape de catalyse d'au moins un composé gazeux choisi parmi l'hydrogène et/ou le monoxyde de carbone en eau, sous forme liquide ou vapeur, et/ou en dioxyde de carbone, respectivement, au moyen desdites particules catalytiques.
- les particules catalytiques sont choisies parmi les oxydes métalliques poreux, telle l'hopcalite, les métaux portés par des supports.
- au moins l'un desdits premier lit et deuxième lit de particules comporte des particules zéolitiques et en ce que le traitement du fluide comporte au moins une étape d'adsorption d'au moins un composé gazeux sur au moins lesdites particules zéolitiques.
- au moins l'un desdits premier lit et deuxième lit de particules comporte des particules zéolitiques et en ce que le traitement du fluide comporte au moins une étape d'adsorption d'au moins un composé gazeux choisi parmi l'azote, le monoxyde de carbone, le dioxyde de carbone ou leurs mélanges, sur au moins lesdites particules zéolitiques.
- le flux gazeux à séparer comprend de l'azote et au moins un composé gazeux moins polaire, notamment de l'oxygène et/ou de l'hydrogène, et, de préférence le flux gazeux est de l'air, le premier composé gazeux étant l'azote et le deuxième composé gazeux étant l'oxygène. L'air étant, dans le cadre de la présente invention, l'air contenu à l'intérieur d'un bâtiment ou d'une enceinte chauffée ou non, ou l'air extérieur, c'est-à-dire dans les conditions atmosphériques, pris tel quel ou éventuellement prétraité.
- on produit un flux gazeux riche en oxygène, c'est-à-dire comprenant, en général, au moins environ 90% d'oxygène.
- on produit un flux gazeux riche en hydrogène, c'est-à-dire comprenant, en général, au moins environ 80% d'hydrogène.
- il est de type VSA (Vacuum Swing Adsorption).
- la pression haute d'adsorption est comprise entre $10^5$ Pa et $10^7$ Pa, de préférence, de l'ordre de $10^5$ Pa à $3.10^6$ Pa.
- la pression basse de désorption est comprise entre $10^4$ Pa et $10^6$ Pa, de préférence, de l'ordre de $10^4$ Pa à $10^5$ Pa.
- la température d'alimentation est comprise entre -50°C et +200°C.
- la température d'alimentation est comprise entre 10°C et 80°C, de préférence entre 25°C et 60°C.
- les premier lit de particules et deuxième lit de particules sont constitués de matériaux identiques ou différents,
- le premier lit est constitué de particules catalytiques et le deuxième lit est constitué de particules d'adsorbant.
- le premier lit est constitué de particules d'adsorbant et le deuxième lit est constitué de particules catalytiques.
- au moins un des premier et deuxième lits est constitué de matériau adsorbant zéolitique choisi, de préférence, parmi les faujasites ou les zéolites A, avantageusement une zéolite X ayant un rapport Si/Al égal à approximativement 1, une telle zéolite est appelée zéolite LSX (Low Silica X) ou zéolite pauvre en silice. Une telle zéolite X peut contenir au moins 80% de cations $Li^+$, de préférence au moins 86%, et/ou au plus 96% de cations $Li^+$, et/ou au plus 15% de cations $Na^+$, de préférence au plus 14%, préférentiellement encore au plus 12%, et/ou au moins 4% de cations $Na^+$, et/ou au plus 5% de cations $Mg^{2+}$, de préférence au plus 2%, et/ou au moins 0.1 % de cations $Mg^{2+}$, de préférence au moins 0.2%, et/ou au plus 8% de cations $Ca^{2+}$, de préférence au plus 5%, et/ou au moins 0.2 % de cations $Ca^{2+}$, de préférence au moins 1%, et/ou au plus 3% de cations $K^+$, de préférence au plus 1%, préférentiellement, au plus 0.5%.

La présente invention concerne aussi l'utilisation d'une installation selon l'invention pour la mise en oeuvre d'un procédé de séparation ou de purification d'air comprenant au moins une étape d'adsorption et/ou au moins une étape de conversion catalytique d'au moins un composé gazeux présent dans l'air à séparer ou à purifier.

Par ailleurs, la présente invention concerne aussi l'utilisation d'une installation selon l'invention pour la mise en oeuvre d'un procédé de séparation ou de purification d'un gaz de synthèse, notamment d'un gaz de synthèse contenant essentiellement de l'hydrogène et/ou du monoxyde de carbone, comprenant au moins une étape d'adsorption et/ou au moins une étape de conversion catalytique d'au moins un composé gazeux présent dans le gaz de synthèse à séparer ou à purifier.

De façon similaire, la présente invention concerne aussi l'utilisation d'une installation selon l'invention pour la mise en oeuvre d'un procédé de séparation ou de purification d'un mélange gazeux contenant essentiellement un ou plusieurs hydrocarbures, notamment des oléfines, comprenant au moins une étape d'adsorption et/ou au moins une étape de conversion catalytique d'au moins un composé gazeux présent dans le mélange gazeux à séparer ou à purifier.

La présente invention s'applique à chacun des adsorbeurs d'un procédé d'adsorption mettant en oeuvre plusieurs adsorbeurs ou à chacun des réacteurs d'un procédé de catalyse mettant en oeuvre plusieurs réacteurs catalytiques.

L'invention va maintenant être décrite plus en détail à l'aide des figures annexées, données à titre illustratif mais non limitatif.

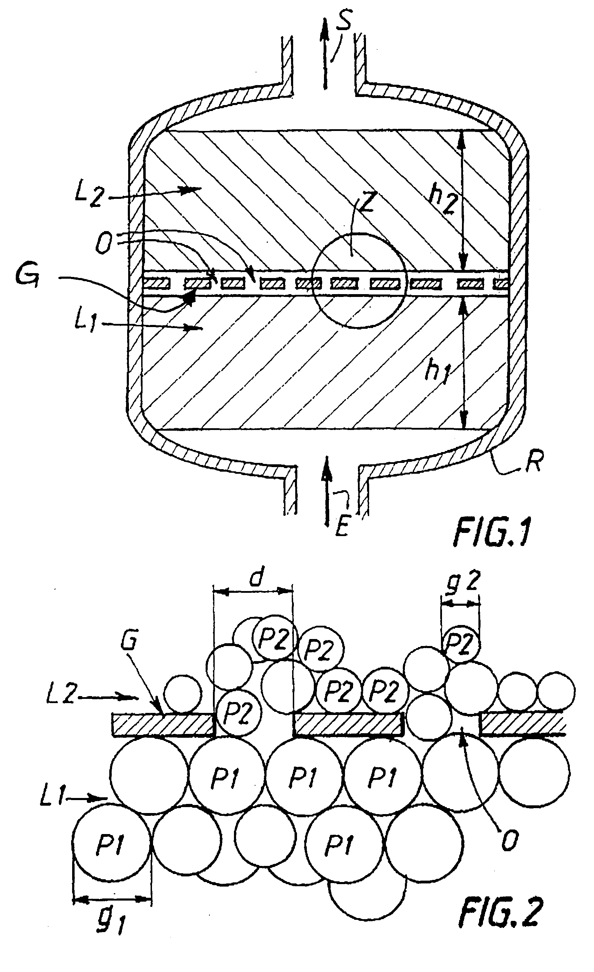

La figure 1 représente un schéma d'une partie d'un premier mode de réalisation d'une installation de traitement de fluide conforme à la présente invention.

Ainsi, la figure 1 est un schéma en coupe longitudinale d'un adsorbeur d'une installation de type PSA, comprenant un récipient R de traitement ou adsorbeur contenant un premier lit L1 de particules P1 ayant une première granulométrie (g1), par exemple 3 mm, et un deuxième lit L2 de particules P2 ayant une deuxième granulométrie (g2), par exemple 1.5 mm.

Selon ce premier mode de réalisation, les premier et deuxième lits L1 et L2 de particules P1 et P2 adjacents sont superposés l'un à l'autre, le lit L1 étant situé du côté de l'entrée E du fluide à traiter et le lit L2 étant situé du côté de la sortie S du fluide après traitement.

Dans ce cas, le fluide à traiter est de l'air, lequel circule axialement et est séparé dans l'adsorbeur R par adsorption de l'azote sur lesdits lits d'adsorbant L1 et L2 de manière à récupérer un gaz riche en oxygène, c'est-à-dire contenant environ 90% d'oxygène.

Les premier et deuxième lits L1 et L2 de particules P1 et P2 sont, en outre, séparés par une structure de séparation, à savoir une grille G ou une plaque métallique percée d'orifices OG de passage du gaz.

Conformément à l'invention, les orifices de passages de fluide ont une dimension, par exemple un diamètre d, tel que: g1>d>g2, par exemple d =2.2 mm.

Ceci est schématisé sur la figure 2 qui est une vue agrandie d'une partie de la zone Z de la figure 1, où l'on peut voir que la grille G comporte des orifices OG dont le diamètre d est bel et bien supérieur à la granulométrie g2 des particules P2 placées sur cette grille G, mais inférieur à la granulométrie g1 des particules P1 situées sous cette grille G.

Cependant, les particules P2 de granulométrie g2 ne peuvent pas passer à travers les orifices OG de la grille G car elles sont retenues par les particules P1 de granulométrie g1 supérieure.

En outre, étant donné que les orifices OG de la grille G ont un diamètre d supérieur à celui des grilles classiquement utilisées dans l'art antérieur, les pertes de charge sont diminuées et donc les performances du procédé de traitement sont améliorées.

En effet, on rappelle que, selon l'art antérieur, il est usuellement préconisé d'utiliser, à l'interface de deux lits de particules, des grilles de séparation dont les perforations sont inférieures au diamètre moyen ou plus généralement aux dimensions des plus petites particules constituant les lits.

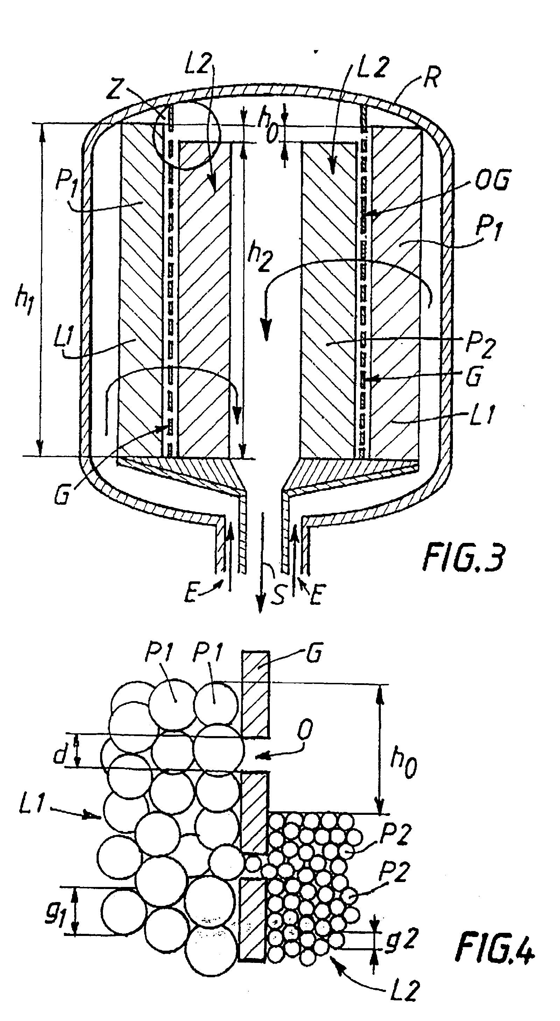

En outre, la figure 3 représente, quant à elle, un schéma analogue à celui de la figure 1, à l'exception du fait qu'elle représente une vue en coupe longitudinale d'un adsorbeur d'une installation de type PSA du type à circulation radiale de fluide.

Là encore, l'installation comprend un adsorbeur R contenant un premier lit L1 de particules P1 ayant une première granulométrie (g1), par exemple 2 mm, et un deuxième lit L2 de particules P2 ayant une deuxième granulométrie (g2), par exemple 0.5 mm.

Cependant, selon ce deuxième mode de réalisation, de par la circulation radiale du fluide, les premier et deuxième lits L1 et L2 de particules P1 et P2 adjacents sont juxtaposés, c'est-à-dire placés l'un à côté de l'autre, et non superposés comme sur la figure 1. Dans ce cas, le fluide à traiter passe radialement d'abord dans le lit L1 puis dans le lit L2.

Comme précédemment, les premier et deuxième lits L1 et L2 de particules P1 et P2 sont séparés par une grille G comportant des orifices OG de passage du gaz ayant un diamètre d, tel que: g1 > d > g2, par exemple g = 1.2 mm.

Ceci est schématisé sur la figure 4 qui est une vue partielle agrandie de la zone Z de la figure 3, où l'on peut voir que la grille G comporte des orifices OG dont le diamètre d est bel et bien supérieur à la granulométrie g2 des particules P2 placées en aval de cette grille G, mais inférieur à la granulométrie g1 des particules P1 situées en amont cette grille G; l'amont et aval étant définis par rapport au sens de circulation du gaz, ledit gaz à traiter passant d'abord à travers le lit L1 puis ensuite à travers le lit L2.

Comme expliqué ci-avant, les particules P2 de granulométrie g2 (avec g2<g1) ne peuvent pas passer à travers les orifices OG de la grille G car elles sont retenues par les particules P1 de granulométrie g1 supérieure. Là encore, les pertes de charge sont diminuées et donc les performances du procédé de traitement sont améliorées.

Cependant, dans ce cas, il convient de veiller à ce que la hauteur h1 du premier lit L1 soit supérieure à la hauteur h2 du premier lit L2, c'est-à-dire que :

$$h1 - h2 = h0 \text{ avec } h0 > 0.$$

En outre, lors du remplissage de l'adsorbeur, on veille à placer d'abord les particules P1 dans l'adsorbeur puis seulement les particules P2 ou l'on fait en sorte que, tout au long du remplissage, la hauteur h1 soit supérieure ou égale à la hauteur h2.

## Revendications

1. Installation de traitement de fluide comprenant au moins un récipient (R) de traitement de fluide contenant au moins un premier lit (L1) de particules (P1) ayant au moins une première granulométrie (g1) et au moins un deuxième lit (L2) de particules (P2) ayant au moins une deuxième granulométrie (g2), lesdits premier et deuxième lits (L1, L2) de particules (P1, P2) étant adjacents et séparés par au moins une structure de séparation (G) comportant des orifices (OG) de passage de fluide ayant au moins une dimension (d), avec: g1 > d > g2.

2. Installation selon la revendication 1, caractérisée en ce que lesdits premier et deuxième lit (L1, L2) de particules (P1, P2) sont superposés l'un à l'autre et en ce que la structure de séparation (G) est en position sensiblement horizontale au sein dudit récipient (R) de traitement.

3. Installation selon la revendication 1, caractérisée en ce que lesdits premier et deuxième lits (L1, L2) de particules (P1, P2) sont juxtaposés et en ce que la structure de séparation (G) est en position sensiblement verticale au sein dudit récipient (R) de traitement.

4. Installation selon l'une des revendications 1 à 3, caractérisée en ce qu'au moins un récipient (R) de traitement est un adsorbeur ou un réacteur catalytique, de préférence un adsorbeur de forme générale cylindrique ou conique.

5. Installation selon l'une des revendications 1 à 4, caractérisée en ce que la structure de séparation est choisie parmi les plaques perforées, les grilles, les crépines, les tissus métalliques et les caillebotis.

6. Installation selon l'une des revendications 1 à 5, caractérisée en ce que la première granulométrie (g1) est comprise entre 3.5 mm et entre 1.5 mm, et/ou la deuxième granulométrie (g2) est comprise entre 1.7 mm et entre 0.3 mm, et/ou la dimension (d) des passages de fluide est comprise entre 1.5 mm et entre 0.5 mm.

7. Installation selon l'une des revendications 1 à 6, caractérisée en ce que la première granulométrie (g1) et la deuxième granulométrie (g2) sont telles que : $g1 \geq 2 . g2$ et/ou $g1 < 6 . g2$, de préférence $g1 \leq 5 . g2$, préférentiellement $g1 \leq 3 . g2$.

8. Installation selon l'une des revendications 1 à 7, caractérisée en ce qu'elle est choisie parmi les installations de type PSA, en particulier VPSA, comportant de 1 à 3 adsorbeurs, de préférence des adsorbeurs à géométrie radiale.

9. Procédé de traitement de fluide, dans lequel on introduit le fluide à traiter dans au moins un récipient (R) de traitement contenant au moins un premier lit (L1) de particules (P1) ayant au moins une première granulométrie (g1) et un deuxième lit (L2) de particules (P2) ayant au moins une deuxième granulométrie (g2), lesdits premier et deuxième lits (L1, L2) de particules, (P1, P2) étant adjacents et séparés par au moins une structure de séparation comportant des orifices (OG) de passage de fluide ayant au moins une dimension (d), avec: g1 > d > g2.

10. Procédé selon la revendication 9, caractérisé en ce que le fluide à traiter est un gaz ou un mélange gazeux, de préférence :

   - un mélange gazeux contenant essentiellement de l'azote et de l'oxygène, notamment l'air,

- un mélange gazeux contenant essentiellement de l'hydrogène et/ou du monoxyde de carbone,
- un mélange gazeux contenant essentiellement un ou plusieurs hydrocarbures, et
- un mélange gazeux contenant du dioxyde de carbone.

**11.** Procédé selon l'une des revendications 9 ou 10, caractérisé en ce qu'au moins l'un desdits premier et deuxième lits (L1, L2) de particules (P1, P2) comporte des particules choisies parmi les zéolites, l'alumine, le gel de silice, le charbon actif et les céramiques.

**12.** Procédé selon l'une des revendications 9 à 11, caractérisé en ce que le traitement comporte au moins une étape d'adsorption ou une étape de catalyse d'au moins un composé contenu dans le fluide à traiter.

**13.** Utilisation d'une installation selon l'une des revendications 1 à 8 pour la mise en oeuvre d'un procédé de séparation ou de purification d'air comprenant au moins une étape d'adsorption et/ou au moins une étape de conversion catalytique d'au moins un composé gazeux présent dans l'air à séparer ou à purifier.

**14.** Utilisation d'une installation selon l'une des revendications 1 à 8 pour la mise en oeuvre d'un procédé de séparation ou de purification d'un gaz de synthèse, notamment d'un gaz de synthèse contenant essentiellement de l'hydrogène et du monoxyde de carbone, comprenant au moins une étape d'adsorption et/ou au moins une étape de conversion catalytique d'au moins un composé gazeux présent dans le gaz de synthèse à séparer ou à purifier.

**15.** Utilisation d'une installation selon l'une des revendications 1 à 8 pour la mise en oeuvre d'un procédé de séparation ou de purification d'un mélange gazeux contenant essentiellement un ou plusieurs hydrocarbures, notamment des oléfines, comprenant au moins une étape d'adsorption et/ou au moins une étape de conversion catalytique d'au moins un composé gazeux présent dans le mélange gazeux à séparer ou à purifier.

FIG.1

FIG.2

FIG.3

FIG.4

Office européen
des brevets

**RAPPORT DE RECHERCHE EUROPEENNE**

Numéro de la demande

EP 00 40 0003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>A<br><br>A<br><br><br>A<br><br><br>A | US 4 424 397 A (HOENE DAVID J, RIGGS JOHN L) 3 janvier 1984 (1984-01-03)<br>* colonne 3, ligne 13 - ligne 30 *<br>* figure 1 *<br>———<br>US 5 176 721 A (HAY LEON, VIGOR XAVIER) 5 janvier 1993 (1993-01-05)<br>* colonne 4, ligne 11 - ligne 46 *<br>* figures 1,2 *<br>———<br>DE 196 00 549 A (LINDE AG) 10 juillet 1997 (1997-07-10)<br>* le document en entier *<br><br>US 4 541 851 A (BOSQUAIN MAURICE ET AL) 17 septembre 1985 (1985-09-17)<br>* colonne 2, ligne 56 - colonne 4, ligne 21 *<br>* figures 1-6 *<br>———— | 1,2,4,5,9<br><br>6,10<br><br>1,3-6,8,9,13<br><br><br>1,3-6,9,10,12,13<br><br>1,3,5,6,9-11,13 | B01J8/04<br>F25J3/00<br>F25J3/08<br>C10K1/20<br>C10K1/24<br>C10K3/04<br>B01D53/04<br>B01D53/88<br>B01D53/86<br>B01J8/00 |

|  |  |  | DOMAINES TECHNIQUES RECHERCHES (Int.Cl.7) |
|---|---|---|---|
|  |  |  | B01J<br>F25J<br>C10K<br>B01D |

Le présent rapport a été établi pour toutes les revendications

| Lieu de la recherche | Date d'achèvement de la recherche | Examinateur |
|---|---|---|
| LA HAYE | 3 avril 2000 | Vlassis, M |

**ANNEXE AU RAPPORT DE RECHERCHE EUROPEENNE
RELATIF A LA DEMANDE DE BREVET EUROPEEN NO.**

EP 00 40 0003

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

03-04-2000

| Document brevet cité au rapport de recherche | | Date de publication | Membre(s) de la famille de brevet(s) | | Date de publication |
|---|---|---|---|---|---|
| US 4424397 | A | 03-01-1984 | DE | 3334909 A | 29-03-1984 |
| | | | JP | 59078137 A | 04-05-1984 |
| | | | NL | 8303298 A | 16-04-1984 |
| US 5176721 | A | 05-01-1993 | FR | 2667800 A | 17-04-1992 |
| | | | AU | 656692 B | 09-02-1995 |
| | | | AU | 5913294 A | 02-06-1994 |
| | | | AU | 648342 B | 21-04-1994 |
| | | | AU | 8566091 A | 16-04-1992 |
| | | | CA | 2053211 A | 12-04-1992 |
| | | | DE | 69106100 D | 02-02-1995 |
| | | | DE | 69106100 T | 24-05-1995 |
| | | | EP | 0480797 A | 15-04-1992 |
| | | | EP | 0612553 A | 31-08-1994 |
| | | | ES | 2065644 T | 16-02-1995 |
| | | | JP | 5146624 A | 15-06-1993 |
| | | | US | RE35913 E | 06-10-1998 |
| | | | ZA | 9108051 A | 29-07-1992 |
| DE 19600549 | A | 10-07-1997 | AUCUN | | |
| US 4541851 | A | 17-09-1985 | FR | 2541588 A | 31-08-1984 |
| | | | AT | 19595 T | 15-05-1986 |
| | | | AU | 558205 B | 22-01-1987 |
| | | | AU | 2483184 A | 06-09-1984 |
| | | | BR | 8400905 A | 02-10-1984 |
| | | | CA | 1218021 A | 17-02-1987 |
| | | | EP | 0118349 A | 12-09-1984 |
| | | | IN | 160331 A | 04-07-1987 |
| | | | JP | 2025668 C | 26-02-1996 |
| | | | JP | 7047106 B | 24-05-1995 |
| | | | JP | 59162923 A | 13-09-1984 |
| | | | KR | 9105985 B | 09-08-1991 |
| | | | PT | 78151 A,B | 01-03-1984 |
| | | | ZA | 8401087 A | 26-09-1984 |

EPO FORM P0460

Pour tout renseignement concernant cette annexe : voir Journal Officiel de l'Office européen des brevets, No.12/82